# EUROPEAN PATENT APPLICATION

(11) **EP 2 604 903 A2**
(43) Date of publication of application: **19.06.2013**
(21) Application number: 12196441.5
(22) Date of filing: 11.12.2012
(51) Int. Cl.: F16L 59/02

(54) **Pipe section**

(30) Priority: 16.12.2011 FI 20116279
(71) Applicant: Paroc Oy Ab, 00621 Helsinki (FI)
(72) Inventor: Hjelt, Tuomo, 53850 Lappeenranta (FI)
(74) Representative: LEITZINGER OY

(57) **Abstract**

The object of the invention is a pipe section (11, 12) comprising an insulating layer (1) composed of mineral wool containing optional additives or auxiliary substances, the insulating layer having a longitudinal split (3) and a longitudinal slit (4) made on its inner surface. On the outer surface of the insulating layer (1) of the pipe section is made at least one longitudinal slit (5, 6) extending a distance into the insulating layer (1).

## Description

### Object of the invention

The object of the invention is a pipe section comprising an insulating layer composed of mineral wool containing optional additives or auxiliary substances, the insulating layer having a longitudinal split, and a longitudinal slit made on its inner surface.

### Prior art

The freight costs of large cylindrical pipe insulation sections, that is, pipe sections are high, because often only one pipe section fits on one platform and there remains a lot of empty space, for example, when the outer diameter is 700 mm or more and the size of the platform used is 1200 x 1200 mm. A partial solution to the problem is to manufacture the pipe sections in two parts, that is, as so-called blocks. In this case, the freight efficiency increases but the product received by the client is not the same. The use of blocks incurs additional costs at the installation stage, because in most cases at least two persons are required to install two separate blocks. Two splits also increase the risk of heat loss somewhat, compared with a so-called normal pipe section with only one split.

### Description of the invention

The aim of the invention is to provide a pipe section by means of which the above-mentioned disadvantages can be avoided.

The pipe section according to the invention is **characterised in that** on the outer surface of the insulating layer of the pipe section is made at least one longitudinal slit extending a distance into the insulating layer.

In a particularly advantageous embodiment of the pipe section according to the invention, the said longitudinal slit made on the inner surface of the insulating layer and the said split in the insulating layer are located on a same first plane, and on the outer surface of the insulating layer are two slits extending a distance into the insulating layer, which are located on a same second plane in such a way that the said first plane and the said second plane intersect each other essentially at right-angles to each other.

It is advantageous that the said split, the said longitudinal slit made on the inner surface of the insulating layer, and the said at least one longitudinal slit made on the outer surface of the insulating layer, extending a distance into the insulating layer, extend in the direction of the thickness of the insulating layer

The outer diameter of the pipe section according to the invention is preferably 0.7 m or more.

Depending on the external form of the pipe to be insulated, the pipe section according to the invention may in principle be of any shape, such as oval in cross-section on both its inner and outer surfaces, but is preferably in the form of a mineral wool pipe section, the inner and outer surfaces of which are circular in cross-section, in which case the mineral wool pipe section has the shape of a cylindrical pipe.

The mineral wool fibres of the insulating layer of the pipe section according to the invention, which is composed of mineral wool containing optional additives or auxiliary substances, are preferably oriented essentially parallel to the circumferential direction of the outer surface of the mineral wool pipe section. The invention may also be implemented with, for example, pipe sections in which the direction of the mineral wool fibres of the mineral wool pipe section is essentially perpendicular to the circumference of the outer surface of the mineral wool pipe section.

### Detailed description of the invention with an example

The invention is now described in greater detail by way of an example, with reference to the accompanying drawings, figures 1 to 3, of which Figure 1 depicts the prior art and Figures 2 and 3 depict an embodiment according to the invention.

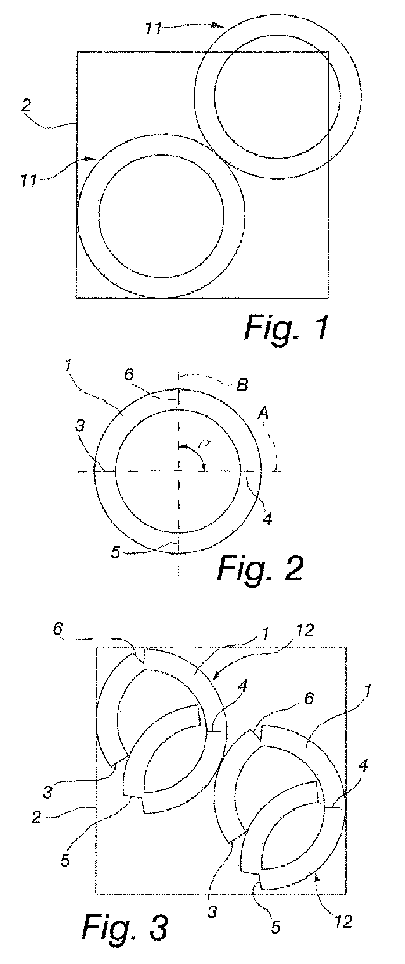

Figure 1 is a diagrammatic top view showing that two cylindrical prior art pipe sections, or pipe sections 11, having an outer diameter of eight metres, do not fit, adjacent to one another, completely on a 1200 mm x 1200 mm prior art platform 2. The prior art cylindrical pipe insulation section (pipe section) only has a longitudinal split and a longitudinal inner slit (not shown in the Figure).
Figure 2 shows a cross-sectional view of a preferred embodiment of the pipe section 12 according to the invention, where two slits 5 and 6, which may be called outer hinges, extending into 2/3 of the depth of the thickness of the insulation are made on the cylindrical outer surface of the insulating layer 1 of the pipe section 12. The slits (or outer hinges) 5 and 6 are located halfway between the normal split 3 and the internal hinge slit 4 (in Figure 2, outer hinges 5 and 6 at 12 and 6 o'clock and split 3 at 9 o'clock and inner hinge 4 at 3 o'clock).

The pipe section is "collapsed" at the slits 5 and 6 of the outer surface of the insulating layer 1 of the pipe section according to the invention, as shown in Figure 3. In this way, two pipe insulation sections 12, that is, pipe sections, fit on the platform 2 instead of one. At the worksite, the client "opens" the pipe sections 12, or pipe insulation sections 12, and they are all disposable as one piece. The pipe sections 12 are typically fixed with steel bands around the pipe sections 12, whereby the outer hinges (slits) 5, 6 are pressed together tightly and the insulating capacity of the product is not impaired at the point in question.

The mineral wool insulating layer 1 of the pipe section 12 according to the invention may be glass or stone wool. In the example shown herein, the insulating layer 1 of the pipe section 12 is a cylindrical mineral wool pipe section and it has no coating, whereby the pipe insulation section is composed merely of a bare mineral wool pipe section 12, which has, in accordance with the invention, two slits 5 and 6 on the outer surface in addition to the inner slit 4 and the split. In this example according to the invention, the mineral wool pipe section 12 is a stone wool pipe section, the stone wool fibres of which are oriented essentially parallel to the circumferential direction of the outer surface of the stone wool pipe section 12.

## Claims

1. A pipe section (11, 12) comprising an insulating layer (1) composed of mineral wool containing optional additives or auxiliary substances, the insulating layer having a longitudinal split (3), and a longitudinal slit (4) made on its inner surface, **characterised in that** on the outer surface of the insulating layer (1) of the pipe section is made at least one longitudinal slit (5, 6) extending a distance into the insulating layer (1).

2. A pipe section (11, 12) as claimed in claim 1, **characterised in that** the said longitudinal slit (4) made on the inner surface of the insulating layer (1) and the said split (3) in the insulating layer (1) are located on a same first plane (A), and that on the outer surface of the insulating layer (1) are two slits (5, 6) extending a distance into the insulating layer (1), which are located on a same second plane (B) in such a way that the said first plane (A) and the said second plane (B) intersect each other essentially at right-angles (α) to each other.

3. A pipe section (11, 12) as claimed in claim 1 or 2, **characterised in that** the said split (3), the said longitudinal slit (4) made on the inner surface of the insulating layer (1), and the said at least one longitudinal slit (5, 6) made on the outer surface of the insulating layer, extending a distance into the insulating layer, extend in the direction of the thickness of the insulating layer.

4. A pipe section (11, 12) as claimed in any of the foregoing claims 1 to 3, **characterised in that** the outer diameter of the pipe section is 0.7 m or more.
